# EUROPEAN PATENT APPLICATION

(11) **EP 3 432 283 A1**
(43) Date of publication of application: **23.01.2019**
(21) Application number: 18181494.8
(22) Date of filing: 03.07.2018
(51) Int. Cl.: G08B 21/02, G08B 21/18, B60R 21/12, G08B 13/196

(54) **SAFE-EXIT SYSTEM FOR SAFETY PROTECTION OF A PASSENGER EXITING AN AUTOMATED VEHICLE**

(30) Priority: 18.07.2017 US 201715652414
(71) Applicant: Aptiv Technologies Limited, St. Michael (BB)
(72) Inventor: LAMBERMONT, Serge, 6221 EW Maastricht (NL); LAUR, Michael, H, Mission Viejo, CA 92692 (US)
(74) Representative: Robert, Vincent

(57) **Abstract**

A safe-exit system (10) for safety protection of a passenger (14) exiting an automated vehicle includes an observation-device (16), a lock-device (34), and a controller (36). The observation-device (16) detects a potential-threat (18) to a passenger (14) of a host-vehicle (12). The lock-device (34) is operable to lock a door (24) of the host-vehicle (12). The controller (36) is in communication with the observation-device (16) and the lock-device (34). The controller (36) is configured to determine a safety-index (38) based on the potential-threat (18), and operate the lock-device (34) to lock the door (24) when the safety-index (38) is less than a safety-threshold (40). Instead of the lock-device (34), the system (10) may include a notification-device (48) operable to convey a safety-alert to the person (26). The controller (36) is in communication with the observation-device (16) and the transmitter. In this system (10) the controller (36) is configured to determine a safety-index (38) based on the potential-threat (18), and operate the notification-device (48) to communicate the safety-alert to the person (26) when the safety-index (38) is less than a safety-threshold (40).

## Description

### TECHNICAL FIELD OF INVENTION

This disclosure generally relates to a safe-exit (or safe-entry) system, and more particularly relates to a system that determines a safety-index based on the potential-threat proximate to a host-vehicle, and takes action to protect an occupant when the safety-index is less than a safety-threshold.

### BACKGROUND OF INVENTION

Automated (i.e. driverless) taxies, also known as automated mobility on demand (AMOD), have been suggested. As a result of replacing a human-driver with a computer, it has been recognized that the safety/security knowledge about a pickup-location or destination that a human-driver may share with a passenger has been eliminated.

### SUMMARY OF THE INVENTION

AMOD passenger drop-offs or pickups could be potentially dangerous situations where harm or property theft could occur. Awareness of the potential threats could alert passengers, decrease occurrences of harm, and/or decrease anxiety for passengers. In one embodiment, the system described herein detects potentially harmful situations and keeps doors locked until a manual unlock is received from the passenger of the AMOD. Reasons for keeping the door locked until manually overridden by the passenger include, but are not limited to: areas with a crime index above a threshold, when ambient light is below a threshold, an animal or object classified as dangerous is within a threshold distance, oncoming traffic creates a dangerous situation, visibility is obstructed due to weather (fog or heavy rain), a passenger request, and/or a policy from dispatch. It is also contemplated that passengers with packages will warrant an increased safety radius.

In accordance with one embodiment, a safe-exit system for safety protection of a passenger exiting an automated vehicle is provided. The system includes an observation-device, a lock-device, and a controller. The observation-device detects a potential-threat to a passenger of a host-vehicle. The lock-device is operable to lock a door of the host-vehicle. The controller is in communication with the observation-device and the lock-device. The controller is configured to determine a safety-index based on the potential-threat, and operate the lock-device to lock the door when the safety-index is less than a safety-threshold.

The system may include a notification-device operable by the controller to indicate the potential-threat to the passenger. The system may include an input-device operable by the passenger to unlock the door. The system may include a receiver configured to receive a broadcasted safety-warning used by the controller to determine the safety-index. The system may include a light-detector configured to indicate an ambient-light-level used by the controller to determine the safety-index.

In another embodiment, a safe-exit system for safety protection of a person preparing to exit an automated vehicle is provided. The system includes an observation-device, a notification-device, and a controller. The observation-device detects a potential-threat to a person preparing to exit a host-vehicle. The notification-device is operable to convey a safety-alert to the person. The controller is in communication with the observation-device and the transmitter. The controller is configured to determine a safety-index based on the potential-threat, and operate the notification-device to communicate the safety-alert to the person when the safety-index is less than a safety-threshold.

The system may include a receiver configured to receive a broadcasted safety-warning used by the controller to determine the safety-index.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of safe-exit system for safety in accordance with one embodiment; and
Fig. 2 is an illustration of a scenario that the system of Fig. 1 may encounter in accordance with one embodiment.

### DETAILED DESCRIPTION

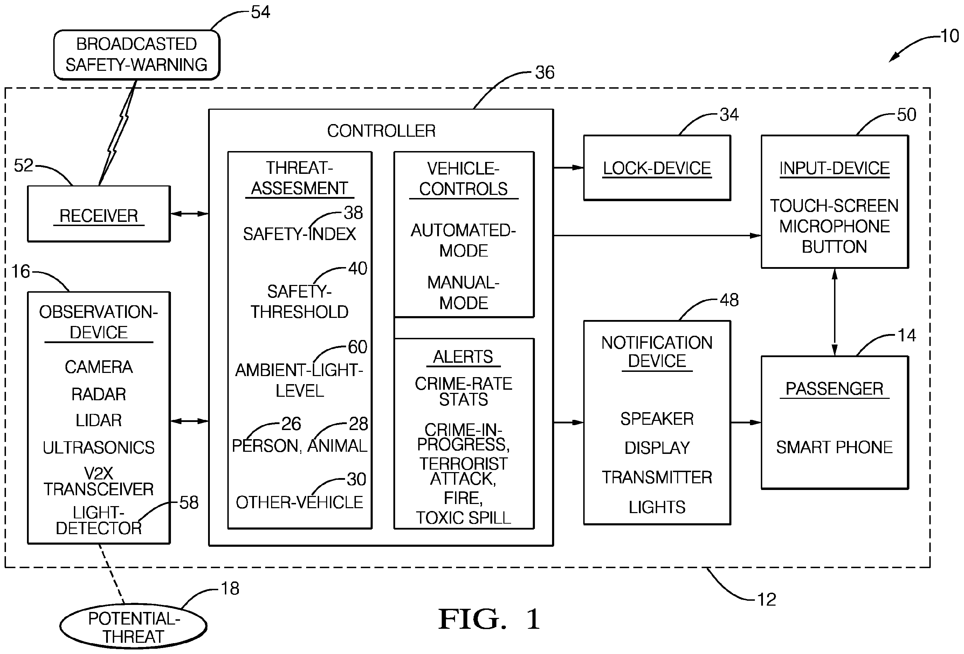

Fig. 1 illustrates a non-limiting example of a safe-exit system 10, hereafter referred to as the system 10, which is generally for safety protection of a passenger 14 exiting an automated vehicle, e.g. a host-vehicle 12. As used herein, the term automated vehicle may apply to instances when the host-vehicle 12 is being operated in an automated-mode, i.e. a fully autonomous mode, where the passenger 14 the host-vehicle 12 may do little more than designate a destination. However, full automation is not a requirement. It is contemplated that the teachings presented herein are useful when the host-vehicle 12 is operated in a manual-mode by an operator (not shown, e.g. a taxi-driver) where the degree or level of automation may be little more than providing an audible and/or visual warnings to the operator who is generally in control of the steering, accelerator, and brakes of the host-vehicle 12. For example, the system 10 may merely assist the operator as needed to increase the safety of the passenger 14 when the passenger 14 exits the host-vehicle 12.

While the explanation of the system may be generally interpreted to be directed to an embodiment of the system 10 that is only configured to help protect the passenger 14 of the host-vehicle 12 at the time the passenger 14 exits the host-vehicle 12, it is contemplated that the teachings presented herein are useful in situations when the passenger 14 is being picked up and has not yet entered the host-vehicle 12. For example, the system 10 may announce that the host-vehicle 12 has arrived at a pickup location to a person who is waiting inside a building and is about to exit the building and cross an open area to become the passenger 14. The announcement may be by way of a message to the person and may include a warning about some situation that may affect the safety of the person while walking from the building to the host-vehicle 12.

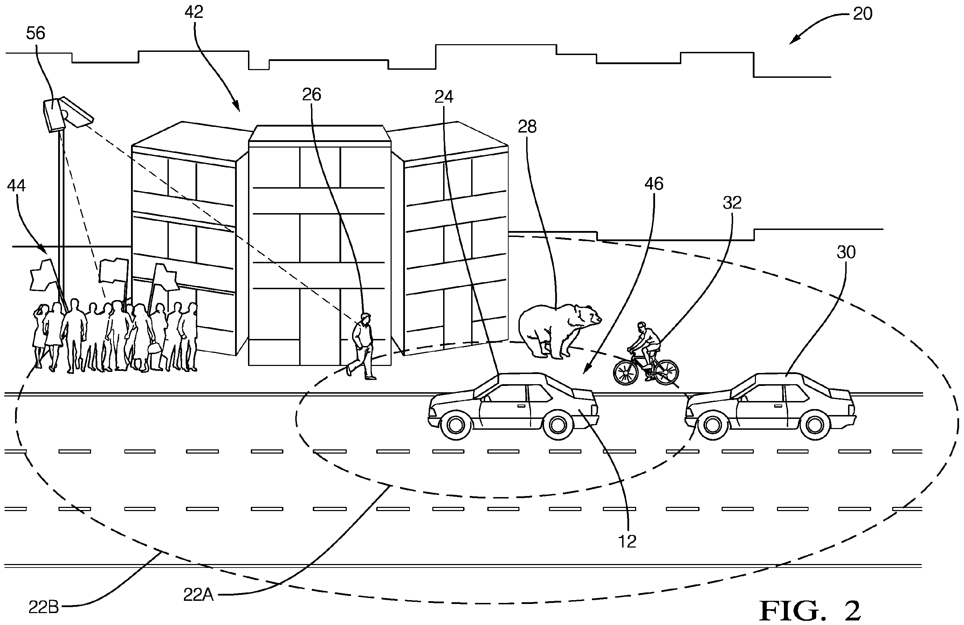

Fig. 2 illustrates a non-limiting example of a scenario 20 where the host-vehicle 12 has arrived at a destination, so the host-vehicle 12 may be stopping to allow the passenger 14 (not shown in Fig. 2) to exit the host-vehicle 12. As will be described in more detail later, the presence of certain objects within a safety-zone 22A may prevent automatic unlocking of a door 24 of the host-vehicle 12 to allow the passenger 14 to exit un-hindered. It is also contemplated that objects outside of the safety zone 22A, but inside an information-zone 22B may not prevent automatic unlocking of the door 24, but may cause a warning to be issued to the passenger 14 before or as the passenger 14 exits the host-vehicle 12.

Continuing to refer to Figs 1 and 2, the system 10 includes an observation-device 16 that is configured to detect objects that could present or be an instance of a potential-threat 18 to the passenger 14 of a host-vehicle 12, in particular if the passenger 14 were to exit the host-vehicle 12. The observation-device 16 may include, but is not limited to, a camera, a lidar device, a radar device, an ultrasonic transducer, a vehicle-to-anything (V2X) transceiver, or any combination thereof. Those in the art will recognize that a wide variety of these devices that are suitable for on-vehicle use are commercially available. Non-limiting examples of what could be classified as an instance of the potential-threat 18 include, but are not limited to, a person 26, an animal 28, an other-vehicle 30, a field-of-view obstruction such a construction barrier (not shown) and/or an approaching-bicycle 32.

The system 10 may include a lock-device 34 that is operable by the system 10 to lock the door 24 of the host-vehicle 12 to prevent the passenger from exiting the host-vehicle 12, and/or prevent, for example, an instance of the potential-threat 18 (e.g. the person 26) from gaining unauthorized or unwanted access to the host-vehicle 12. The lock-device 34 may be the type of locking-mechanism that is typically found on any vehicle door, or it may be a secondary locking mechanism that can only be operated by the system, i.e. not manually operated.

The system 10 includes a controller 36 in communication with the observation-device 16 and the lock-device 34. The controller 36 may include a processor (not specifically shown) such as a microprocessor or other control circuitry such as analog and/or digital control circuitry including an application specific integrated circuit (ASIC) for processing data as should be evident to those in the art. The controller 36 may include memory (not specifically shown), including nonvolatile memory, such as electrically erasable programmable read-only memory (EEPROM) for storing one or more routines, thresholds, and captured data. The one or more routines may be executed by the processor to perform steps for determining when the door 24 of the host-vehicle 12 should be locked or unlocked based on signals received by the controller 36 as described herein.

In order for the system 10 to help improve the safety of the passenger 14 (or a person about to become the passenger 14), the controller 36 is configured to determine a safety-index 38 based on the potential-threat 18, and operate the lock-device 34 to lock the door 24, or keep the door 24 locked if already locked, when the safety-index 38 is less than a safety-threshold 40. By way example, the threat-index may be a number between one (1) and five (5) where one means that no instances of the potential-threat 18 are detected, and five means that a clear and present danger to the passenger has been detected, that a building 42 (Fig. 2) adjacent to the drop-off-location 46 is on fire and there is a riot 44 in progress within one-hundred-meters (100m) of the drop-off-location 46. As another example, the threat-index may be set to three (3) if the person 26 is detected by the observation-device 16 and the intent of the person 26 is unclear. The safety-threshold 40 may be determined based on information about the passenger 14 such as age, sex (male/female), size, and/or weight. For example, the safety-threshold 40 may be set relatively low (e.g. 2.5) if the passenger is an eighteen year old, relatively small female, and may be set higher (e.g. 3.5) if the passenger is a thirty year old, relatively large male. This information may be obtained by way of an identification of the passenger 14 and/or measurements made by the system 10 using, for example, a camera and a weight sensor inside the host-vehicle 12. It is also contemplated that the system 10 may keep the door 24 locked until an authorized person is present outside of the host-vehicle 12 to receive the passenger 14. For example, the passenger 14 may be a child traveling from school to home, and the authorized person may be the parent of the child. The observation-device 16 may be used to determine the identity of the parent by way of a camera or smart-phone communications.

The system 10 may include a notification-device 48 such as, but not limited to, a display, a speaker, an indicator-light, or any combination thereof, that is operable by the system 10, or more specifically by the controller 36, to indicate or point-out the potential-threat 18 to the passenger 14. For example, the display may show an image of the person 26 and indicate a direction to the person 26. As another non-limiting example, the approaching-bicycle 32 may be detected by the observation-device 16 and the system 10 would wait to automatically unlock the door 24 until after the approaching-bicycle 32 had passed the host-vehicle 12. It is also contemplated that the notification-device 48 may be present in the system 10 without the locking-device 34. That is, in an alternative embodiment, the system 10 may only warn the passenger 14 but not lock the door 24 and require some action on the part of the passenger 14 to unlock the door 24.

The system 10 may also include an input-device 50 such as, but not limited to a button, a microphone, a touch-screen (which may be part of the display of the notification-device 48), or any combination thereof which is operable by the passenger 14 to unlock the door 24. For example, the system 10 may require some sort of confirmation by the passenger 14 that the drop-off-location 46 is correct before unlocking the door 24 regardless of the safety-index. Alternatively, the system 10 may only require some action on the part of the passenger 14 to unlock the door 24 when the safety-index 38 is less than the safety-threshold. It is also contemplated that the system 10 may keep the door 24 locked until an authorized person is present outside of the host-vehicle 12 to receive the passenger 14. For example, the passenger 14 may be a child traveling from school to home, and the authorized person may be the parent of the child. The observation-device 16 may be used to determine the identity of the parent by way of a camera or smart-phone communications.

The system 10 may also include a receiver 52 configured to receive a broadcasted safety-warning 54 that may be based on information gathered using cameras 56 (Fig. 2) operated by a law enforcement agency. By way of example and not limitation, the broadcasted safety-warning 54 may include a crime-in-progress-alert, crime-rate statistics, a weather-alert, a fire-alert, a toxic-spill-alert, a tsunami-alert, or any other information relevant to the safety of the passenger. The information in the broadcasted safety-warning 54 may be used by the controller to determine the safety-index 38.

The system 10 may also include a light-detector 58 configured to indicate an ambient-light-level 60, which may be used by the controller 36 as a variable to consider when determining the safety-index 38. For example, if the ambient-light-level 60 corresponds to day-time lighting, then the safety-index 38 may be set lower (i.e. indicating a safer condition) than would be the case if the ambient-light-level 60 corresponds to night-time lighting 38. While it is recognized that time-of-day could be used to indicate ambient lighting, the light-detector 58 is particularly useful to determine if, for example, a street or parking area is well illuminated during night-time hours.

Accordingly, a safe-exit system (the system 10), a controller 36 for the system 10, and a method of operating the system 10 is provided. The system 10 provides for increased protection or security of a passenger 14 exiting the host-vehicle 12 or of a potential passenger approaching or about to enter the host-vehicle 12. While the description above is presented in view of AMODs (i.e. automated taxies), it is contemplated that the teachings herein can be applied to personally owned vehicles where the passenger 14 is the owner, and the system 10 also operates the host-vehicle 12 to park itself after the passenger 14 exits the host-vehicle 12, or when the owner 'calls' the host-vehicle 12 to pickup the owner at some location.

While this invention has been described in terms of the preferred embodiments thereof, it is not intended to be so limited, but rather only to the extent set forth in the claims that follow.

## Claims

1. A safe-exit system (10) for safety protection of a passenger (14) exiting an
automated vehicle, said system (10) comprising:
an observation-device (16) that detects a potential-threat (18) to a passenger (14) of a host-vehicle (12);
a lock-device (34) operable to lock a door (24) of the host-vehicle (12); and
a controller (36) in communication with the observation-device (16) and the lock-device (34), said controller (36) configured to determine a safety-index (38) based on the potential-threat (18), and operate the lock-device (34) to lock the door (24) when the safety-index (38) is less than a safety-threshold (40).

2. The system (10) in accordance with claim 1, wherein the system (10) includes a notification-device (48) operable by the controller (36) to indicate the potential-threat (18) to the passenger (14).

3. The system (10) according to any one of the claims 1 or 2, wherein the system (10) includes an input-device (50) operable by the passenger (14) to unlock the door (24).

4. The system (10) according to any one of the preceding claims, wherein the system (10) includes a receiver (52) configured to receive a broadcasted safety-warning (54) used by the controller (36) to determine the safety-index (38).

5. The system (10) according to any one of the preceding claims, wherein the system (10) includes a light-detector (58) configured to indicate an ambient-light-level (60) used by the controller (36) to determine the safety-index (38).

6. A safe-exit system (10) for safety protection of a person (26) preparing to exit an
automated vehicle, said system (10) comprising:
an observation-device (16) that detects a potential-threat (18) to a person (26) preparing to exit a host-vehicle (12);
a notification-device (48) operable to convey a safety-alert to the person (26); and
a controller (36) in communication with the observation-device (16) and the transmitter, said controller (36) configured to determine a safety-index (38) based on the potential-threat (18), and operate the notification-device (48) to communicate the safety-alert to the person (26) when the safety-index (38) is less than a safety-threshold (40).

7. The system (10) in accordance with claim 6, wherein the system (10) includes a receiver (52) configured to receive a broadcasted safety-warning (54) used by the controller (36) to determine the safety-index (38).
